# EUROPEAN PATENT APPLICATION

(11) **EP 1 445 967 A1**
(43) Date of publication of application: **11.08.2004**
(21) Application number: 02801517.0
(22) Date of filing: 09.10.2002
(51) Int. Cl.: H04Q 7/38, H04M 3/42

(54) **CELLULAR TELEPHONE HAVING GAME PROGRAM**

(30) Priority: 12.10.2001 JP 2001314618; 01.02.2002 JP 2002026179; 22.02.2002 JP 2002045489
(71) Applicant: Patent Section, Inc., Osaka-shi, Osaka 532-0027 (JP)
(72) Inventor: FUJIWARA, Noriyuki, 602 Shin Eikura Bldg., Tokyo 158-0097 (JP)
(74) Representative: Maury, Richard Philip
(86) International application number: PCT/JP2002/010480
(87) International publication number: WO 2003/034768

(57) **Abstract**

To give a portable telephone set user enjoinment of receiving of telephone calls or mails by linking a telephone function with a prize service, a portable telephone set has a game program capable of displaying the game result based on the game program on a display means, the game based on the game program is started (S4), corresponding to incoming to or calling from the portable telephone set (S2), the game result capable of providing a specified benefit to the user of the portable telephone set is displayed on the display means corresponding to a connection cancel of the incoming to or calling from the portable telephone set, or passing of the predetermined time (S8).

## Description

### BACKGROUND OF THE INVENTION

### Field of the Invention

The present invention relates to a portable telephone set having a game program capable of providing a predetermined contrivance to users of the portable telephone set corresponding to an incoming or calling, a service providing server corresponding to a game result to be executed by the portable telephone set, and a service providing method. More particularly, the present invention relates to the portable telephone set having a game program capable of starting the game corresponding to the incoming or calling, determining the game result corresponding to a cancel of the incoming, and executing the service corresponding to the game result, and also relates to the service providing server corresponding to the game result to be executed by the portable telephone set, and the service providing method.

In recent years, the spread of the portable telephone set has been remarkable, and especially, almost all persons among the young become to have the portable telephone set. On the other hand, in order to differentiate an incoming tone from that of the other user, individualization of a so-called incoming melody has been promoted, wherein the melody can be changed into the favorite music by the liking of the user. Further, as for a standby screen displayed on a display means of the portable telephone set, there is a tendency for an original favorite standby screen of the user to be used to attain differentiation from the portable telephone set of the other person.

Moreover, recently, various games, such as an i application or the like, can be carried out by the portable telephone set by JAVA specification in an i-mode. Furthermore, as for the above-mentioned standby screen, although there has been only a still image conventionally, the standby screen having a moving image also appears by JAVA application.

As the standby screen having the moving image, (1) the screen utilizing a 3D polygon engine has been provided as the JAVA application for J-Phone by SEGA Corp., wherein "Urara" who is a heroin of "Space Channel 5" appears in the standby screen and the character drawn by the 3D polygon plays a dance (refer to an address homepage of http://k-tai.impress.co.jp/news/2001/05/14/jpsega. htm) .

This JAVA application is introduced in the homepage as follows, that is, "An animation in interlock with the incoming of a telephone or mail can be displayed, or a voice incoming tone by "Urara" can be set. Besides this, the users can enjoy a congeniality of a communicating party or the like with "Call Sichoritu", which is a congeniality divination displaying the congeniality ranking, by replying an easy question, such as "How about the telephone at now?". The replied data of the users are stored, and the pleasure function, in which a costume or motion of "Urara" is changed or the mysterious character appears by more and more using, is also prepared."

Further, many services capable of a prize application using the portable telephone set have been also provided. For example, (2) Japanese Patent Laid Open No. 2000-243333 (the document A), (3) Japanese Patent Laid Open No. 2001-76066 (the document B), (4) Japanese Patent Laid Open No. 2001-16335 (the document C), and (5) Japanese Patent Laid Open No. 11-242714 (the document D), have been known.

In the document A in (2), a prize executing method for executing the prize by using a portable terminal such as the portable telephone set or the like and a prize system were indicated. More particularly, the document A was carried out to have an object, in which the work required for executing the prize can be reduced to the minimum at both sides of the applying side and executing side of the prize competition.

The document B in (3) was carried out to have an object for pursuing an interactive capability of a lot application, and a system to inform a lottery result to an applicant immediately by e-mail or the like after carrying out the lot application was indicated.

The document C in (4) was carried out to have an object for providing a communication prize system capable of obtaining the result on the spot. It was provided that an applicant, who is a caller, applies for the prize sponsored by a sponsor, who is a responder, by operating a communication terminal to connect a center device thorough an information communication network, and the center device decides the hit or miss on the spot to the application from the communication terminal, replies immediately the decided result to the communication terminal through the information communication network, and informs it to the applicant.

In the document D in (5), a method for sending a mutual greeting card with a prize lottery was provided.

As mentioned above, according to the appearance of the JAVA application, the moving image can be used to the standby screen where various characterizations are easily made as compared with the still image, and when a person has the same portable telephone as the other person, he can have more originality one by using the screen having the different moving image from that of the other person.

Furthermore, by using the game as this JAVA application, the portable telephone set has been changed from a telephone only used by portage to a telephone having the portable game function capable of enjoying a game. However, these are only the mixture of two or more functions, and in almost all these telephone sets, the harmony between the telephone function and the JAVA application is not conscious. As the proposal in which the harmony between the portable telephone set and the JAVA application is conscious, only the above-mentioned (1) has been proposed as far as the present inventors know.

Further, in the above-mentioned conventional proposal in (1), it was provided only that the animation in interlock with the incoming at the portable telephone set is displayed, and it is only interesting but there are no benefits for the users receiving a telephone call. Further, since the users cannot look the display of the portable telephone set during his calling, he may not notice the change of the moving image corresponding to the incoming, will get bored in short time since there are no benefits for the users, and will not look the display where the moving image is changed, thus there is a problem that this special contrivance cannot be fully provided to the users.

The present invention has an object to make more closely harmony between the JAVA application and the portable telephone set, and has a first object to provide a system as a service, where the users can enjoy the calling by the portable telephone set (including a mail) or the incoming to the portable telephone set (including a mail), and the benefit can be provided to the users of the portable telephone set by calling with or incoming to the telephone.

On the other hand, a prize service system has been provided conventionally in order to give the added value to the use of the portable telephone set, as described in (2) to (5), wherein the prize application is carried out by the portable telephone set, a lottery is carried out based on the prize application, and the prize can be got by the result of the lottery. However, the relationship between these services and the so-called telephone function, such as calling or incoming by using the portable telephone set, i.e., an organic relationship, was not considered at all. These services have not any difference with that the prize application is carried out from a home personal computer by an Internet or the like, thus these services have no contrivance to enjoy at the time of calling or incoming.

Further, as for such the prize, since it is necessary to apply spontaneously to access to an exclusive server or station periodically, some users think that it is troublesome, thus there is a problem that many users of the portable telephone set does not use such the prize system. Furthermore, while increasing such the prize service, there are problems about gathering latent users, that is, if the system capable of giving the service to the users without troublesome is not introduced, more users cannot be expected.

Further, in the above-mentioned conventional (3) and (4), although these have the objects that the lottery result can be looked immediately, the lottery result is informed immediately to the portable telephone set by communicating, and it is necessary to wait until transmitting the lottery result after finishing, thus it is also hard to say that the lottery result is known on real time.

In addition to the first object, the present invention has an object to provide the portable telephone set having the game program, in which the users of the portable telephone can enjoy the incoming of the telephone call or receiving of the mail by coordinating the telephone function of the portable telephone set and the prize service, and also to provide the service providing server corresponding to the game result to be executed by the portable telephone set, and the service providing method.

### Summary of the Invention

For solving the above-mentioned problems, in the present invention, the game is started corresponding to the incoming to or calling from the portable telephone set, and the specified benefit can be provided to the users corresponding to the game result decided at the time of canceling the incoming.

More particularly, the following inventions are provided.

(1) A portable telephone set according to the present invention is a portable telephone set having a game program capable of displaying a game result based on the game program on a display means, and the telephone set comprises a control contents, where the game based on the game program is started corresponding to the incoming to or calling from the portable telephone set and the game result capable of providing the specified benefit to the users is displayed on the display means corresponding to the cancel of a connection of the incoming or calling or after passing of a predetermined time.

In an upper concept, it is characterized that a lottery result, such as hit or miss, is informed to the users by the display means (the display means of an image or sound) of an terminal, such as, a portable telephone set, personal computer or the like, corresponding to the incoming to the terminal. That is, the portable telephone set comprises a memory means for memorizing a display data for displaying the lottery result, such as the hit or miss, on the display means in the terminal of the portable telephone set, personal computer or the like and a control means for extracting the lottery result from the memory means corresponding to the incoming to the terminal and displaying on the display means.

In the above-mentioned constitution, the game is started corresponding to the incoming to or calling from the portable telephone set, the started game is ended corresponding to the cancel of the incoming, such as a call end, an end of receiving the mail or the like, or ended after the predetermined time has elapsed, and the ended game result is displayed on the display means on the portable telephone set. So, the users can enjoy for every incoming to the telephone as to what the game result will be. That is, since the portable telephone set is in the state capable of displaying the game result for every incoming, the users can enjoy the next displayed game result. So, the new contrivance can be added to the portable telephone set, such as the users can enjoy the incoming to the telephone.

Furthermore, as for the game result capable of providing the specified benefit, if the service capable of obtaining the prize or prize money corresponding to the game result is added, the users will look forward to incoming from the other telephone even the users regard incoming of a telephone call as troublesome. In addition, if the number of incoming is increased intentionally by the users requesting the call of the telephone to the other person, the users of the portable telephone set can be increased to increase a telephone demand, thus the telephone company may take the benefit.

Moreover, if an advertising information is displayed on the display means of the portable telephone set together with the game result, the users look the advertising information simultaneously with the game result, which is displayed corresponding to the connection cancel of the incoming or calling, thus there is a merit to obtain the advertising effect.

Further, if the game started corresponding to the incoming or calling is a slot game, where good and bad game results are judged by the users by the combination of various patterns, the users can judge whether the game result is good or bad in an instant. Furthermore, if the changing patterns of the slot themselves are the advertising information, it can be provided to the users with a clearer impression.

In addition, as mentioned above, in the case of providing the service such as the prize or the prize money corresponding to the game result, when the game program is made to be a slot game program and the patterns themselves are made into same patterns of the image of the prize or the prize money, which can be obtained by the users, wherein the patterns advance based on the slot game program and are displayed by the incoming cancel, the users can know what kind of the prize is won in an instant by looking at the game result (the patterns arranged with a same symbol) on the display means. In addition, the users can also know what kind of the prize or the prize money can be obtained, after the game result is missed. These are merits for the users.

Moreover, when the game result is the winning, the following constitution may be used, that is, transmitting the game result to a game result receiving station such as the predetermined server by operating the portable telephone set by the users themselves, or transmitting the game result automatically by preparing an automatic transmission program in the portable telephone set, and delivering the prize or the prize money corresponding to the game result, wherein the automatic transmission program can automatically transmit the game result to the specified address or telephone number corresponding to the game result. Of course, the following constitution can be also used, that is, memorizing once the won game result in the portable telephone set, transmitting the won game result at the time of the next calling to a station of the portable telephone set, such as a relay station, or a server for providing a service, such as the prize or the like, and confirming the game result at the station or the server. Thereby, it can be constituted that the prize or the prize money can be given to the won users through the station or the server based on the game result.

Further, although it can be constituted that the won game result is transmitted to the external station or the like from the portable telephone set, a following business model can be also used as the other method, that is, memorizing the game result displayed on the display means in a memory part of the portable telephone set, showing the memorized game result to a staff of a store, and taking the prize or the prize money corresponding to the game result.

(2) The portable telephone set also comprises a control content, in which when the portable telephone set gets the incoming (including the mail) during a presentation for displaying the game result on the display means (during a lottery presentation), a priority is given to this incoming, and the presenting operation is suspended until canceling the connection with the incoming person.

More particularly, when the portable telephone set gets the incoming during the lottery presentation, the priority is given to this incoming and a lottery flag is stocked. Thereby, the telephone company can be taken into the sponsor to decrease the cost burden to the other sponsor, and the prize or the prize money to the users can be made more gorgeous.

(3) A problem resulting from a battery capacity of the portable telephone set can be taken up. That is, when the game program is started frequently to execute the game, the battery is consumed intensely.

In order to solve the problem, the portable telephone set further comprises a control content, in which the execution of the game is canceled on condition of carrying out a first button operation being intended beforehand by the user of the portable telephone set. That is, a cancel mode for executing the game at the user side is prepared.

(4) In the case of a service system, in which the users go to the sponsor (the store) to be confirmed the game result by the sponsor and can obtain the prize or the prize money corresponding to the game result, when the right to obtain the benefit in the store is secured to the users, the users can obtain the same benefit if the game result is not erased. In such the service, there is a problem especially at the time of providing an expensive prize or the like by the store.

In order to solve the problem, the portable telephone set further comprises a control content, in which a data relating to the game result is erased on condition of carrying out a second button operation being intended beforehand by the sponsor. Thereby, the sponsor giving the benefit to the users, such as the prize or the prize money, can prevent the inconvenience, that the duplicated benefit based on the same game result is given to the users having the same portable telephone set.

Moreover, the portable telephone set further comprises a control content, in which an identification code (for example, a three-dimensional bar code) for showing a validity time limit of the game result is displayed on the display means at the time of displaying the game result on the display means, where the identification code can be read out by a reading device (for example, a bar code reader) at the sponsor side. In this case, the sponsor can judge whether the game result has a validity or not, by reading out the validity time limit of the game result using an identification code reading means.

Furthermore, the portable telephone set further comprises a control content, in which a data relating to the game result is erased on condition of reaching the validity time limit of the game result. Thereby, it becomes difficult that the users change the game result with the prize or the prize money after passing the validity time limit, and it becomes possible to prevent an injustice, such as giving the same benefit two or more times.

(5) In the case of supposing the system, in which the prize or the like is delivered through a distributor medium, it is supposed that an address input by the portable telephone set is troublesome.

With consideration of this point, the portable telephone set further comprises a control content, in which a registered information is transmitted to the server on condition of registering the information being necessary for delivering the prize or the prize money corresponding to the game result by carrying out a third button operation being intended beforehand by the user. Thereby, if the information relating to a delivery destination is registered before the game, the prize or the like corresponding to the game result is delivered automatically to the delivery destination address.

(6) The portable telephone set further comprises a GPS function and a control content, in which a regional game result is displayed on the display means by using the GPS function. Thereby, for example, the benefit of the store around the portable telephone set can be obtained corresponding to the game result, thus the users become to be more interested in the game result.

(7) The portable telephone set further stores a stop program for prohibiting the execution of the game program corresponding to the end of a campaign period of the game, and comprises a control content, in which the execution of the game program is stopped compulsorily by operating the stop program on condition that a clocking means of the portable telephone set clocks the end of the campaign period. Thereby, it can be prevented that the prize or the like is requested after the end of the game providing period by the sponsor, that is, after the providing period of the prize or the like.

(8) A service providing server according to the present invention is a server capable of receiving the game result from the portable telephone set through a communication line network and providing the service corresponding to the received game result to the users of the portable telephone set, wherein the game is started corresponding to the incoming to or calling from the portable telephone set and the game result is decided corresponding to a connection cancel based on the incoming or calling (for example, a call end or an end of receiving the mail), or after passing a predetermined time.

(9) In order to correspond to the above portable telephone set (5), the server finds out the registration information of the delivery destination of the prize money or prize corresponding to the game result in a database on condition of receiving the game result from the portable telephone set, and transmits an instruction to a distributor terminal through the communication line network based on the registration information, wherein the instruction is for delivering the prize or prize money to the delivery destination of the user of the portable telephone set.

(10) In order to correspond to the above portable telephone set (6), the server transmits the regional game result to the portable telephone set based on a GPS signal, on condition of receiving the GPS signal from the portable telephone set.

(11) In order to correspond to the above portable telephone set (7), the server periodically obtains the clocked time of the portable telephone set, and makes to arange the clocked time in the clocking means at the portable telephone side with the clocked time at the server side.

(12) When the use of the game program is prevented with time limit by the clocking means of the portable telephone set, like the above portable telephone set (7), there is a problem that the game result may be came out even after ending a campaign since the clocking means of the portable telephone set is out of order or is made out of order by unjustly changing.

In order to solve such the problem, the server confirms campaign stocks by communicating with a center through the communication line network before judging the game result, and judges whether the campaign period of the game is ended or not corresponding to the stock confirmation result.

(13) A service providing method according to the present invention comprises two stages, that is, one stage is starting the game corresponding to the incoming to or calling from the portable telephone set, transitioning to a connecting state and receiving the game result decided after canceling the connection state or passing the predetermined time from the portable telephone set, and the other stage is informing the winning of the prize or the prize money corresponding to the received game result.

(14) In order to correspond to the above portable telephone set (5), the service providing method further comprises a stage on condition of receiving the game result from the portable telephone set, that is, finding out the registration information of the prize money or prize delivery destination corresponding to the game result in the database, and transmitting the instruction to the distributor terminal through the communication line network based on the registration information, wherein the instruction is for delivering the prize or prize money to the delivery destination of the users of the portable telephone set.

(15) In order to correspond to the above portable telephone set (6), the service providing method further comprises a stage for transmitting the regional game result to the portable telephone set based on the GPS signal, on condition of receiving the GPS signal from the portable telephone set.

(16) In order to correspond to the above portable telephone set (7), the service providing method further comprises a stage for periodically obtaining the clocked time of the portable telephone set, and synchronizing the clocked time of the clocking means at the portable telephone side with the clocked time at the server side.

(17) When the use of the game program is prevented with time limit by the crocking means of the portable telephone set like the above portable telephone set (7), there is a problem that the game result may be came out even after ending a campaign since the clocking means of the portable telephone set is out of order or is made out of order by unjustly changing.

In order to solve such the problem, the service providing method further comprises a stage for confirming the campaign stocks by communicating with the center through the communication line network before judging the game result, and judging whether the campaign period of the game is ended or not corresponding to the stock confirmation result.

According to the above inventions (8) and (13), the same effect as that of the invention (1) can be obtained.

Further, as for the above inventions (8) and (13), when the game result is the winning, the following constitution may be used, that is, transmitting the game result to a game result receiving station such as the predetermined server by operating the portable telephone set by the users themselves, or automatically transmitting the game result by preparing an automatic transmission program in the portable telephone set, and delivering the prize or the prize money corresponding to the game result, wherein the automatic transmission program can automatically transmit the game result to the specified address or telephone number corresponding to the game result. Of course, the following constitution can be also used, that is, memorizing once the won game result in the portable telephone set, transmitting the won game result at the time of the next calling to the station of the portable telephone set, such as the relay station, or the server for providing the service, such as the prize or the like, and receiving the game result at the station or the server. Thereby, it can be constituted that the prize or prize money can be given to the won users through the station or the server based on the game result.

Moreover, in the above inventions (1) to (17), the game program may have the constitution capable of suitably downloading plural programs by operating the input means of the portable telephone set from a game download server capable of connecting by the portable telephone set, wherein the game program is started corresponding to the incoming to or calling from the portable telephone set and the plural programs are prepared beforehand in the server corresponding to the kind of the prize or the prize money.

Further, in this case, when the game program is made to the program connecting with the advertisement of the sponsor of the prize, the service for providing the prize or the prize money can be promoted as the specified benefit from the sponsor to the users of the portable telephone set, where the prize or prize money is different for every sponsor, thus there is an effect that a new business model can be built.

For example, it can be constituted that the advertising effect for the sponsor can be obtained by making the game into the slot game, and using the pattern of the merchandise advertised by the sponsor as a design of the changing patterns of the slot, or using the pattern showing a sponsor's name. Thereby, the prize for giving the specified benefit to the users of the portable telephone set can be improved, thus the users can be given with another interest in using the telephone.

### BRIEF EXPLANATION OF DRAWINGS

Figure 1 is a system constitution view applying a portable telephone set having a game program, a server providing a service corresponding to the game result to be executed by the portable telephone set, and a service providing method according to the present invention.
Figure 2 is a hard block diagram of the portable telephone set shown in Figure 1.
Figure 3 is a hard block diagram of the server shown in Figure 1.
Figure 4 is a flow chart showing a flow of the providing method of the service corresponding to the game result to be executed by the portable telephone set based on the system shown in Figure 1.
Figure 5 is a flow chart showing a flow of the providing method of the service corresponding to the game result to be executed by the portable telephone set based on the system shown in Figure 1.
Figure 6 is a flow chart showing a flow of the providing method of the service corresponding to the game result to be executed by the server based on the system shown in Figure 1.
Figure 7 is a flow chart showing a modified example of the flow of the service providing method shown in Figures 4 and 5.
Figure 8 is a flow chart showing an erasing procedure of the game result.
Figure 9 is a system constitution view according to another preferred embodiment.
Figure 10 is a flow chart showing a delivery procedure of a prize.
Figure 11 is a system constitution view according to another preferred embodiment.
Figure 12 is a block diagram showing a constitution of the portable telephone set according to another preferred embodiment.
Figure 13 is a flow chart showing an information providing procedure using GPS.
Figure 14 is a flow chart showing a prohibition procedure of the game.

### DETAILED DESCRIPTION OF PREFERRED EMBODIMENT

Hereinafter, a preferred embodiment as one example applying the present invention to a portable telephone set and a server capable of connecting with the portable telephone set is explained with drawings.

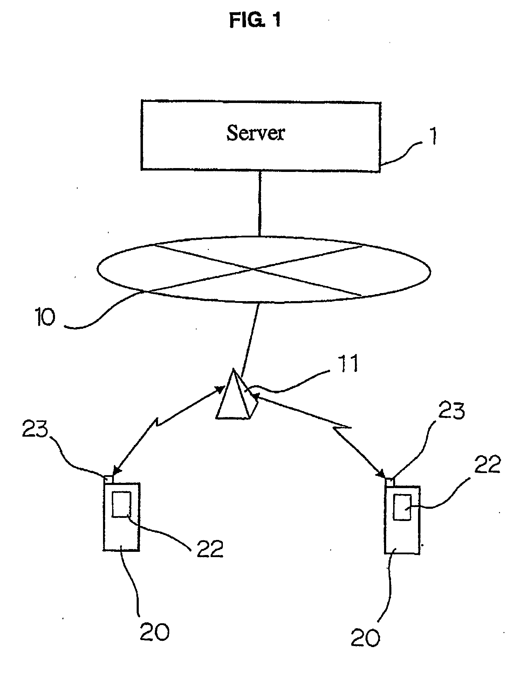

Figure 1 shows the system constitution view applying the present invention. In this figure, 1 is a service providing server, and the service providing server 1 is constituted to be capable of transmitting and receiving the data with a portable telephone set 20 through an internet network 10 and a base station 11.

The portable telephone set 20 can carry out calling or exchange of the mail with another portable telephone set 20 through the base station 11 and is constituted to be possible to connect to the server connected with the internet network which can be connected through the base station 11.

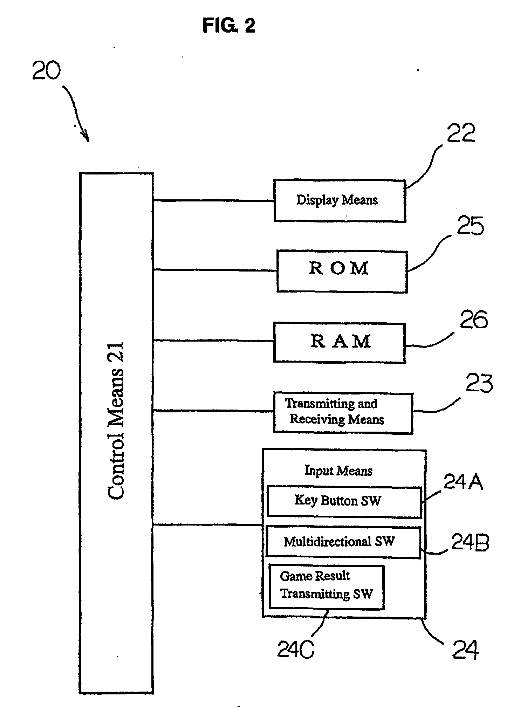

Figure 2 shows the hard constitution view of the portable telephone set 20, and this portable telephone set includes a control means 21. To the control means 21, the following hardwares are connected, that is, a display means 22 capable of displaying the standby screen and the game result of a slot game being mentioned after, a transmitting and receiving means 23, such as an antenna or the like, an input means 24 for carrying out a character input of the telephone number or an electronic mail by the users of the portable telephone set 20, ROM 25 where a system program or the like is memorized beforehand, and RAM 26 as a memory means capable of suitably memorizing or erasing the slot game program or the number of the other portable telephone set or stationary telephone set by operating the input means 24 by the user.

In the RAM 26, "the slot game program in connection with a certain sponsor" is memorized as mentioned above. This "the slot game program in connection with a certain sponsor" is constituted so that can be downloaded from a server mentioned after, but it is not limited to this constitution. This program may be constituted so as to preinstall beforehand to ROM 25 or RAM 26 as the memory means in the portable telephone set 20.

In particular, when the object to prevent the change of the program is pursued, a mask ROM which is unrewritable should be memorized in the production process. At this time, if it is desired to suitably replace a changing pattern of the slot with a pattern of a merchandise or company name in which the sponsor wants to advertise, it is preferable to separate the image data of the changing pattern from the other game programs and download suitably only the image data from the server 1 by operating the input means 24 of the portable telephone set 20, in order to decrease the downloaded data. Further, if the program may be changed into a probability table proposed by the sponsor corresponding to a wining number based on a number of prizes or a sum of the prize money which are provided from the sponsor corresponding to the game result of the slot game, it is preferable to constitute the program so as to separate not only the image data but also the probability table from other game programs and to be changeable suitably. However, in this preferred embodiment, it is constituted that all slot game programs are downloaded from the server 1.

As the above-mentioned display means 22, a liquid crystal display generally used to the portable telephone set 20 is used for saving an electric power. Further, as the above-mentioned input means 24, three switches are prepared, that is, a key button switch (key button SW) 24 A for making a mail or inputting the telephone number of the other party to talk with, wherein the alphabet and the number are marked on the surface of the button, a multidirectional switch (multidirectional SW) 24 B for selecting the various functions, and a game result transmitting switch (game result transmitting SW) 24 C being only used for transmitting the slot game result. The game result transmitting switch 24 C is not indispensable. The game result is transmitted to the server by using the key button switch 24 A and multidirectional switch 24 B, and the game result having the right to obtain the prize or the prize money with the slot game is transmitted to the server 1, and then, the arrangements for delivering the prize or the prize money corresponding to the game result can be executed.

In addition, in the portable telephone set 20 mounting JAVA, a usual telephone call is carried out by using an operating system and native software (Browser, Networking Component, Phone Dialer or the like). On the other hand, each JAVA application (game program or the like) stored in ROM 25 or RAM 26 can be managed by Java Application Manager (JAM).

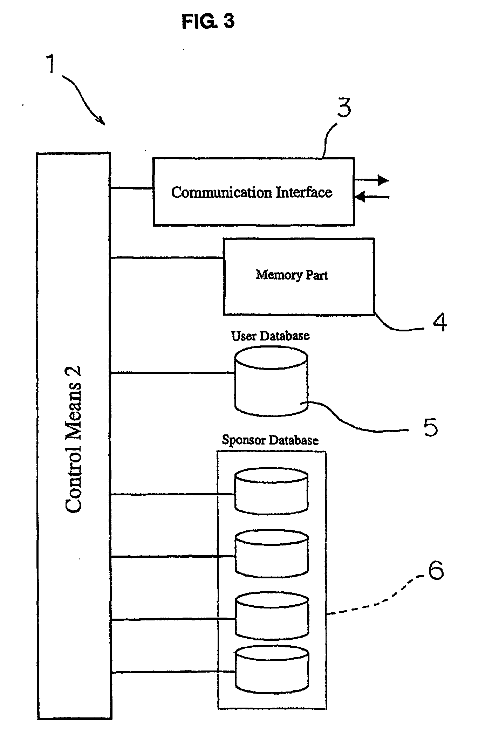

Figure 3 shows the hard block diagram of the server 1. The server 1 includes the control means 2, and the control means 2 is connected with the followings, that is, a communication interface 3 for carrying out the transmitting and receiving of the electronic data by connecting to the internet network 10, a memory part 4, which has a hit informing program judging whether it is the winning or not based on the game result received from the portable telephone set 20, and informs the hit corresponding to the judgment, an user database 5, where an ID information such as the addresses, ages, sexes or the like corresponding to the portable telephone numbers of the users of two or more portable telephone sets is memorized, and a sponsor database 6, where plural kinds of the data program capable of providing the specified benefit, such as the prize, the prize money or the like provided by the sponsor to the users of the portable telephone set 20 are memorized.

The sponsor database 6 comprises a set of plural databases, and in each database, the game programs capable of executing the slot game in the probability table for each sponsor are memorized. Further, besides the game programs for every sponsor, which execute the slot game by the portable telephone set 20, various image data and character data capable of browsing the content of prize and the prize money or the hittable number of the prize or prize money by the operation of the input means 24 of the portable telephone set 20 are memorized to be possible to be retrieved.

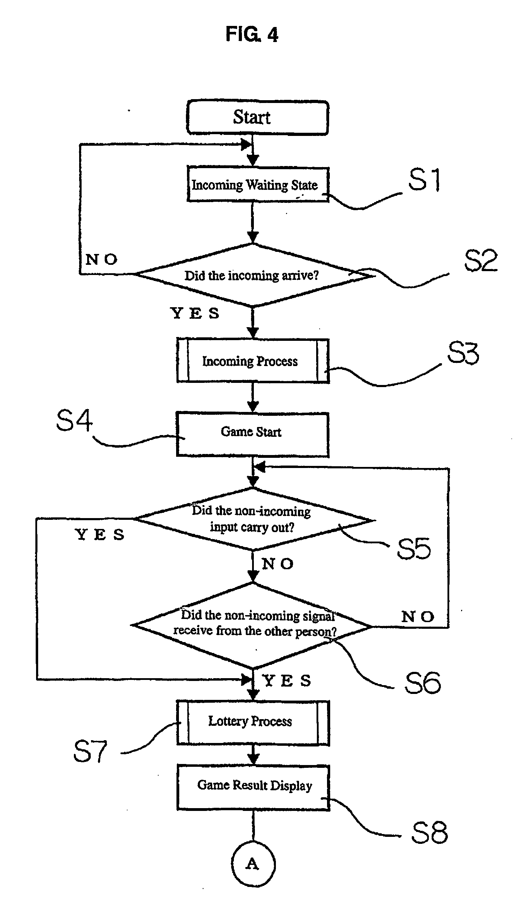

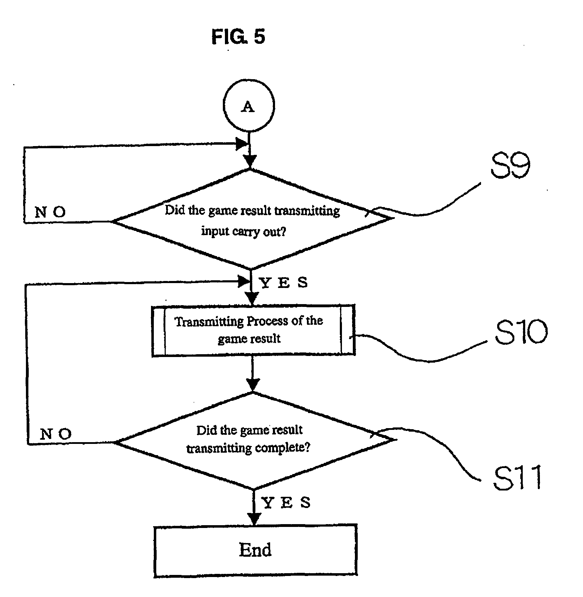

In this way, the users can download the game program as follows, that is, browsing the prize or the prize money corresponding for each game program in the plural game programs memorized in the sponsor database 6 by operating the input means 24 of the portable telephone set 20 of the users themselves, deciding the game program to be downloaded by considering which the prize or the prize money is targeted, and downloading the decided game program by operating the input means 24. After completing the download, as mentioned concretely referring to Figures 4 and 5 after, the slot game is started at the time of every incoming to the portable telephone set 20, and ended on the opportunity of interrupting the connection corresponding to the operation of the input means 24 for a call end as a stage of the incoming being canceled, and then, the game result of the slot game is displayed on real time on the display means 22 of the portable telephone set 20. In this preferred embodiment, although the program has the constitution, where the slot game downloaded beforehand is started on the opportunity of the incoming to the portable telephone set 20, it is not limited to this constitution, and the program also has the constitution, where the slot game is started on the opportunity of the calling. In such case, the following effect can be expected, that is, the users of the portable telephone set 20 can enjoy using the portable telephone set 20 because of expecting that the game result in the slot game be a hit. Further, if the slot game is started on the opportunity of the incoming like this preferred embodiment, there will be an effect that users can wait the incoming from the other telephone set 20 because expecting a hit in the lottery.

### [Flow of the game]

As mentioned above, referring to Figure 4, when the download of the slot game to RAM 26 of the portable telephone set 20 is completed, the portable telephone set 20 waits the incoming from the other telephone set (Step S1).

Further, when the control means 21 judges the incoming from the other telephone set by the system program memorized beforehand in ROM 25 (Step S2 : YES), the control means 21 prepares the game program by starting the game program of the slot game in RAM 26 and makes transmitting and receiving with the incoming telephone possible (Step S3).

When the preparation of the game start is completed, the control means 21 starts the slot game (Step S4). When the game is started, the changing state of patterns is displayed on three display windows in the display means 22 of the portable telephone set 20. Further, the changing state of patterns is kept until the incoming is canceled, that is, until the connection with the other telephone set is canceled.

When an input operation for the call end is carried out by the input means 24 of the portable telephone set 20, the control means 21 detects the input (Step S5 : YES).

When the input operation is not carried out by the input means 24 of the portable telephone set 20 (Step S5 : NO), a signal of the cancel of the connection state from the incoming telephone is received or the connection state with the incoming telephone is interrupted (transition into a non-incoming state), then the control means 21 detects this information (Step S6 : YES).

Further, when the control means 21 detects that the incoming state is changed to the non-incoming state at the stage of (Step S5 : YES) or (Step S6 : YES), while the changing state is continuously displayed on the display means 22 to keep the state where the slot game advances, a lottery process for deciding whether the lottery result of the slot game is won or lost (that is, hit or missed) is executed by using the probability table in the downloaded game program, wherein the lottery process is based on the control of the control means 21 (Step S7).

In this preferred embodiment, the lottery is carried out at the stage of canceling the connection, because the game program is constituted that the probability table is changed corresponding to the using time in order to increase the winning probability of the slot game as much as the using time of the telephone from the incoming to the cancel of the connection becomes longer. That is, in this constitution, if the calling time is longer, it becomes more easy to win. If the game program has such the constitution, there is a merit in the telephone company which collects telephone charges as an income, and when a part of call charges collected from the users by the telephone company is appropriated for the management charge of the server 1, the telephone company can be taken into the sponsor to decrease the cost burden to the other sponsors. Thus, the prize or the prize money to the users can be made more gorgeous. In addition, the using time is measured by a timer means equipped with the portable telephone set, which is not shown in the drawings, and the lotteries in plural probability tables are executed corresponding to the time.

In addition, it is preferable that the lottery is not carried out immediately after changing to the non-incoming state, but the changing pattern is stopped several seconds later and the game result is then displayed by using the timer means. By constituting in this way, it can be prevented that the users cannot watch excitedly what pattern being stopped since the game result is displayed before the users look at the display means 22 after the call end. That is, it becomes possible to make the users being felt excitedly by looking at the display means 22 where the process from the changing state to the stop of the pattern is displayed.

The game result is displayed on the display means 22 corresponding to the lottery of S7 (Step S8).

In the case of winning the game result, when the operation input of the game result transmitting switch 24 C being as the input means 24 of the users is detected (Step S9 : YES), the preparation process for transmitting the game result to the server 1 (Step S10) is carried out, wherein the server 1 is positioned in an address being prepared beforehand in the game program. This preparation is the process for connecting the obtained game result with the telephone number of the portable telephone set as one data. Further, when the process of the step S10 is completed, the portable telephone number data and the game result are automatically transmitted to the server 1, wherein the portable telephone number is for judging the portable telephone set from which the transmitting is made, and when the control means 21 of the server 1 detects the completion of the transmitting, the connection with the server 1 is interrupted to be ended.

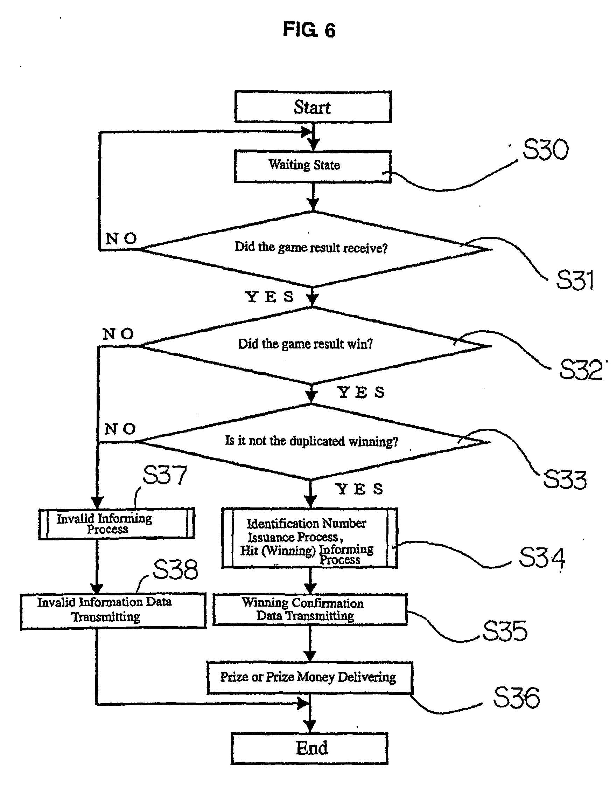

Next, the process flow in the server 1 after transmitting the game result to the server 1 is explained based on Figure 6.

At first, the server 1 keeps the waiting state where it is waiting the connection for the download of the slot game program from the portable telephone set 20 and the receiving of the game result (Step S30).

Next, when the game result is transmitted to the server 1 in the step S11, the control means 2 detects the receiving of the transmitted game result (Step S31).

When the game result is transmitted in the step S31, the control means 2 judges whether the received game result is the winning or not by comparing the received game result with a winning comparison table of the sponsor database 6 corresponding to the slot game (Step S32). If the result is judged as not winning based on the control means 2 (Step S32 : NO), the process for preparing the data informing that the result is not winning (Step S37) is executed, and when the making of the invalid information data is completed, the mail address corresponding to the portable telephone number, where the invalid game result is transmitted, is extracted from the user database 5, and the invalid information data is transmitted to the extracted address (Step S38).

When the winning of the received game result is confirmed by the control means 2, next, the control means 2 judges whether the winning is a duplicated winning from the same portable telephone set 20 or not (Step S33). In this preferred embodiment, the duplicated winning is prevented in order to remove the users, who are going to obtain the prize or prize money unjustly by transmitting the same game result to the server two or more times. In order to confirm whether the duplicated winning or not, a history data for every users is updated and memorized in the user database 5 at the stage of confirming the validity of the winning at Step 32, wherein the history data is the data, such as what kind of the game program is downloaded, what prize is won until now or the like. At this time, the ID information capable of identifying for every portable telephone number is considered. The control means 2 uses such the download state data of the game program in the past or the history data relating to the won result, and can confirm the duplicated winning. In the case of the duplicated winning, the invalidity of the winning is informed to the portable telephone set 20 of the users with a mail or a voice reproduced by an automatic voice program, through the step S33 : NO and the steps 37 and 38.

Next, when it is confirmed that the winning is not the duplicated winning, processes for issuing an authentication number to the winning and extracting the image data admiring the winning from the database corresponding to the game result of the sponsor database 6, are carried out (Step S34). The authentication number is issued for using it later to an inquiring when the prize or the prize money is not transmitted to the users.

After the step S34, when the authentication number prepared in the step S34 and the image data for informing the winning (for example, the image data for informing again what prize is hit to the user, or the like) are prepared, the prepared authentication number and image data for informing the winning are transmitted to the address of the portable telephone set 20 of the users as a winning confirmation data (Step S35). This address data is extracted from the user database 5.

When the transmitting of the winning confirmation data is completed in Step S35, next, a delivering process of the won prize or prize money is executed by referring to the user database 5 (Step S36), and the process is ended.

In addition, in the above-mentioned preferred embodiment, although the case of always executing the game is mentioned, the present invention is not limited to this case, and the execution of the game may be canceled by operating the key button switch 24 A by the users in the present invention. In this case, when a game cancel instruction is inputted by the key button switch 24 A, the control means 21 of the portable telephone set 20 makes the execution of the game program memorized in RAM 26 into the prohibited state based on the instruction. Thereby, as for the portable telephone set 20, the game is not started at the time of the incoming, thus the exhaustion of a battery can be decreased. The users can select whether the game is executed or not, according to a battery residual power.

Further, in the above-mentioned preferred embodiment, although the case capable of always executing the game program is mentioned, the present invention is not limited to this case. The game program may be made into the prohibited state at the time of obtaining the predetermined game result, for example, hitting the prize to obtain the desired prize or prize money. In this case, the control means 21 of the portable telephone set 20 sets a flag for prohibiting the execution of the game program stored in RAM 26 based on that the transmitting of the game result is completed in Step S11 shown in Figure 5. Thereby, since the execution of the same game program is made into the prohibited state to the users who obtain the prize being somewhat expensive, the executions of games provided by as many sponsors as possible can be demanded by the users, and the injustice can be prevented.

The system of the preferred embodiment of the present invention, in which the process is carried out based on the flow charts in Figures 4 and 5, is explained concretely.

In 1st "Ordinary state", that is, in the case of the ordinary state not getting the incoming, the incoming is waited with the state of the still image of the slot (that is, the ordinary standby screen). As for the still image of the slot, several patterns for switching an angle, such as an expansion, a reduction or the like, are prepared.

In 2nd "Incoming", that is, in the case of the incoming, the part of the slot of the image becomes to be rotated, and the original incoming melody being only for the slot rings. As for the incoming melody, the original sound source corresponding to each content, such as the selected character or the like, is used.

In 3rd "Call", if the call is responded, the image is switched to the ordinary image of the call. In addition, even in the case of the absence of the users or transmitting to an automatic answering telephone, when the incoming is confirmed, the slot is rotated. At this time, an incoming result image is stocked in the memory until three times in the case of absent of the users, and then, the users can confirm the contents. However, for more than three times of the incoming, the memory of the incoming result image being recorded at first is erased.

As for 4th "Call end", when the call is ended, the image is switched to the so-called ordinary standby screen, and the users can know the result of the slot. When the patterns are not arranged, the users must wait in the state of the so-called ordinary standby image until the next incoming.

As for 5th "If the patterns of the slot are arranged!!", when the patterns are arranged in the result of the slot, the users register the record to the server according to indications of the screen. Then, the users can get the prize, such as an original goods or the like in connection with the character of the slot, later. At this time, the record (program) of the won image and the mail address of the users are registered directly to the server from the portable terminal of the users. Further, as for an exchange of the prize, the delivery destination or the like of the users is confirmed by-directly exchanging the mail with the users.

In addition, the users can stock the slot image, in which the patterns are arranged, in the server, and can use the slot image as the ordinary standby screen by downloading it. While using the slot image as the ordinary standby screen, the function as "Machi suro" is made into the stopped state.

Next, a business model in the system schematic view shown in Figure 1 is explained concretely.

At first, a WEB site being the site of "Machi suro" is opened on an Internet, and the users of this site (user side) receive distributions of various image data or music data, on condition of registering as a member and paying a membership fee (for example, the monthly amount of 300 yen). Further, when the patterns of the slot parts of the slot image in the distributed image data are arranged, the users can get a present. In addition, specific users can receive the above-mentioned service by only registering as the member without paying the membership fee.

On the other hand, the users of the site of "Machi suro" (company side) can get a new business chance, by using this site. For example, a certain company can request a promotion to the site of "Machi suro", on condition of paying various costs, such as advertisement medium costs, character production costs or the like. Further, a certain company can obtain loyalties on condition of setting a copyright to the person managing the site of "Machi suro". Furthermore, a certain company can expand the size of corporation of its company, on condition of partnering with the person managing the site of "Machi suro".

In this way, from the existing character to the production of the original character (illustrating of a talent or a voice actor), the character and the person are given a new sense of values (merchandise value) to involve them into the "Machi suro (slot) "by the site of the "Machi suro". In addition, when an original sound source (incoming melody) is added to the character or the person, it is possible to lead to create the further business chance.

### [Modified example]

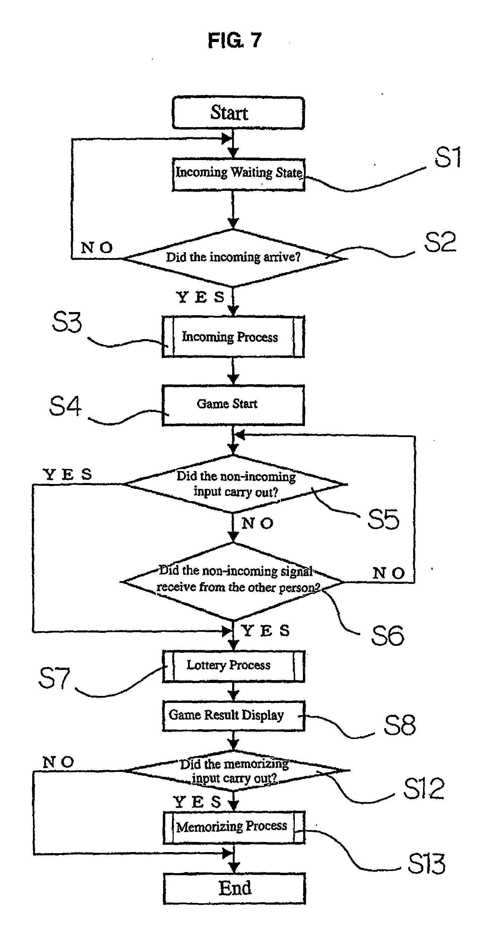

In Figure 7, the modified example of the process in the portable telephone set 20 in Figures 4 and 5 is shown, and since the steps S1 to S8 have the same flow as these of Figures 4 and 5, the same codes are applied and the repeating explanation is omitted. In this modified example, although the flow is the same until that the slot game program corresponding to the prize or the prize money provided by each sponsor is downloaded to the portable telephone set 20, the game result, where the winning of the slot game is displayed on the display means 22, is not transmitted to the server 1 through a communication line network such as an Internet network or the like. When the game result is the winning, the users memorize the image data displaying the game result in RAM 26 of the portable telephone set 20, and go to the sponsor to show the image data of the won game result, thus the users can obtain the prize or the prize money. As such a sponsor, a store is assumed mainly, and when the image data is shown to the staff of the store as the sponsor, the users can obtain the benefit capable of eating with no charge or at a reduced rate.

That is, when the won game result is displayed in the step S8 and the control means 21 judges the operation input for memorizing the won image in RAM 26 by the input means 24 of the portable telephone set 20 (Step S12 : YES), the control means 21 executes a memorizing process of the won game result to RAM 26 (Step S13). If the control means 21 judges that the operation input of the game result obtained in the step S12 is not carried out since the time is over or the power supply of the portable telephone set 20 is turned off (Step S12 : NO), the game result is erased to end the process.

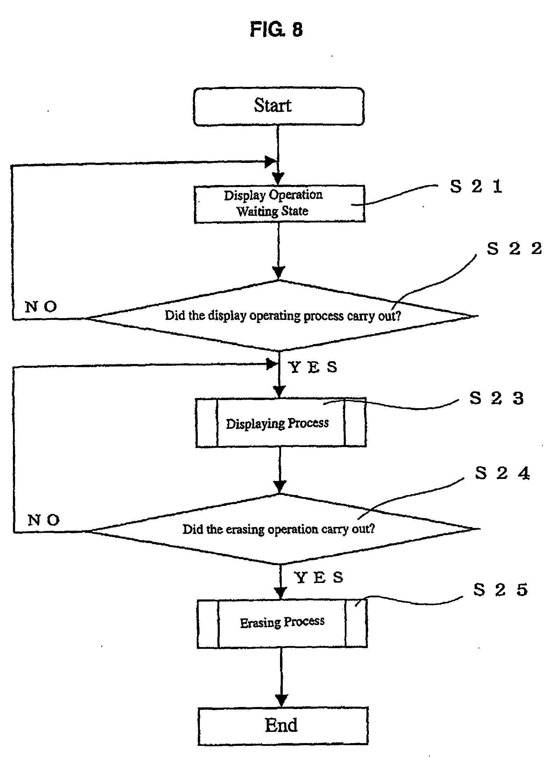

Figure 8 is the flow chart showing the process after memorizing the game result in RAM 26 by the memorizing process of the game result shown in Figure 7 (Step S13). The control means 21 of the portable telephone set 20 is constituted so as to display the game result memorized in RAM 26 on the display means 22, based on the operation result of the key button switch 24 A.

That is, in Figure 8, the control means 21 becomes into the display operation waiting state, in which the display operation is waited, while memorizing the game result in RAM 26 (Step S21). In this state, for example, when the users input a display instruction of the game result by going to the sponsor such as the store with the portable telephone set 20 and operating the key button switch 24 A (Step S22 : YES), the control means 21 detects the operation input to display the game result on the display means 22. The sponsor gives the benefit to the users, such as the prize money, the prize or the like, corresponding to the game result displayed on the display means 22.

After giving the benefit to the users, when the sponsor inputs the predetermined erasing instruction by operating the key button switch 24 A of the portable telephone set 20 (Step S24 : YES), the control means 21 erases the data of the game result, which is displayed on the display means 22 at this time, from RAM 26 (Step S25).

Since the data of the game result can be erased from RAM 26 by the predetermined operation of the key button switch 24 A in this way, the sponsor giving the benefit, such as the prize money, the prize or the like, to the users can prevent the inconvenience of giving the duplicated benefit based on the same game result to the users having the same portable telephone set 20.

Further, as for the information displayed on the display means 22 in a displaying process (Step S23), the game result is displayed as the image, which can be understood by a human, for example, the image in which three patterns are arranged, and in addition, the decided time limit of the game result may be displayed with a bar code. Thereby, the sponsor can read the time limit information by a bar code reading device to judge whether the game result is valid or not. Further, the control means 21 may erase the game result from RAM 26 when the time limit of the game result comes according to the program stored in ROM 25, instead of the method for judging the validity using the bar code. Thereby, since the user is difficult to exchange the game result passing over the time limit, for the prize money or the prize, the injustice can be prevented, such as obtaining the same benefit two or more times.

### [Delivery of the prize]

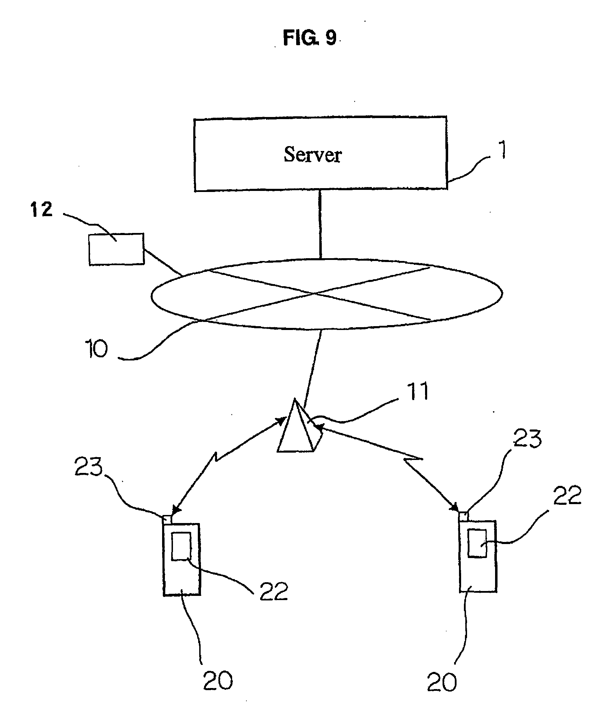

Figure 9 is the system constitution view according to another preferred embodiment of Figure 1. As for the parts comprising the same constitutions, since the parts are the same as these of Figure 1, the same codes are applied and the repeating explanation is omitted.

In each portable telephone set 20, when an initial setting information for the prize delivery destination, which is the initial setting contents such as the address of the users, is inputted, it is registered in the user database 5 of the server 1 (Figure 3) through an Internet network 10, together with an information for specifying the portable telephone set 20, such as the telephone number or the like of the telephone set 20. The initial setting information is used as the information of the prize delivery destination based on the game result, when the information of the game result is transmitted from the portable telephone set 20.

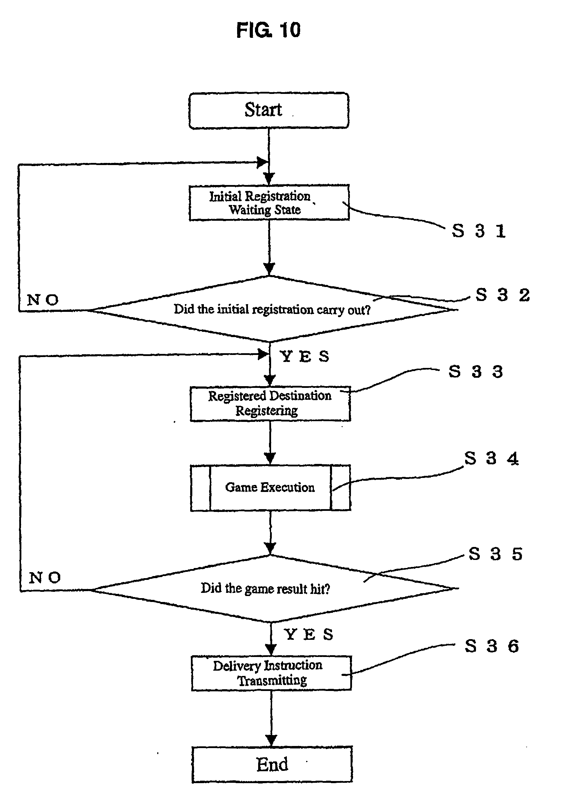

Figure 10 is the flow chart showing the process procedure of the portable telephone set 20 for delivering the prize to the predetermined delivery destination based on the game result. In this Figure 10, the portable telephone set 20 enters in an initial registration waiting state at first before executing the game (Step S31), and waits the input of the initial setting information (the prize delivery destination) by the users.

When the user input the prize delivery destination as the initial setting information by operating the key button switch 24 A of the portable telephone set 20 (Step S32 : YES), the control means 21 transmits the inputted address of the delivery destination to the server 1 through an Internet network 10, together with the information for specifying the portable telephone set 20, such the telephone number or the like. Thereby, in the server 1, the prize delivery destination corresponding to the portable telephone set 20 is registered on the user database 5.

In this way, the above-mentioned game in Figures 3 and 4 is started (Step S34), and the control means 21 judges the game result whenever the game is carried out. Further, when the game result is the result capable of obtaining the prize (Step S35 : YES), the control means 21 transmits the information of the game result to the server 1 through an Internet network 10, together with the information for specifying the portable telephone set 20 (the telephone number or the like).

Thereby, the server 1 receiving the information of the game result transmits a instruction to a distributor terminal 12 (Figure 9), wherein the instruction is for delivering the prize being decided beforehand according to the information of the prize delivery destination memorized in the user database 5. The distributor terminal 12 receiving the instruction carry out a delivery instruction by displaying the information for specifying the prize, such as a prize number or the like, and the address of the delivery destination on the display means (not shown in Drawings).

Thereby, if the users only register the prize delivery destination as the initial setting beforehand, the prize corresponding to the game result is delivered to the delivery destination. Therefore, it is not necessary to carry out the complicated operation, such as inputting the address for every game result, thus it is easy to carry out the game much more for the users.

### [Providing the benefit by using GPS]

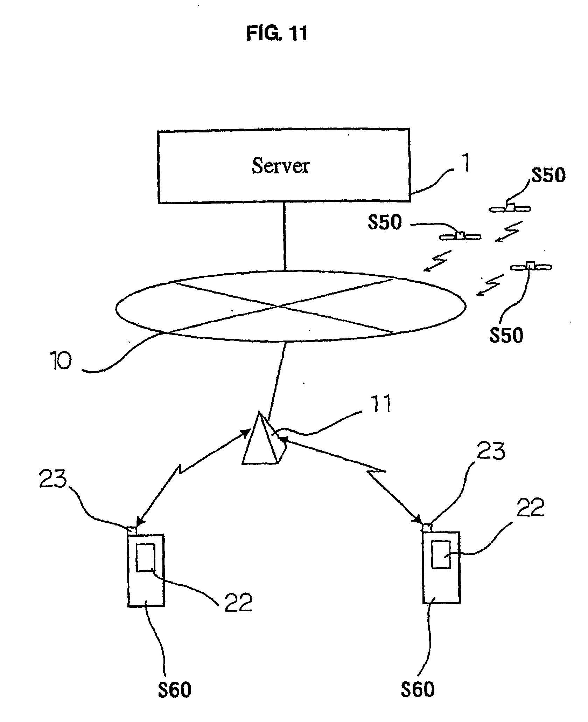

Figure 11 is the system constitution view according to another preferred embodiment of Figure 1. As for the parts comprising the same constitutions, since the parts are the same as these of Figure 1, the same codes are applied and the repeating explanation is omitted.

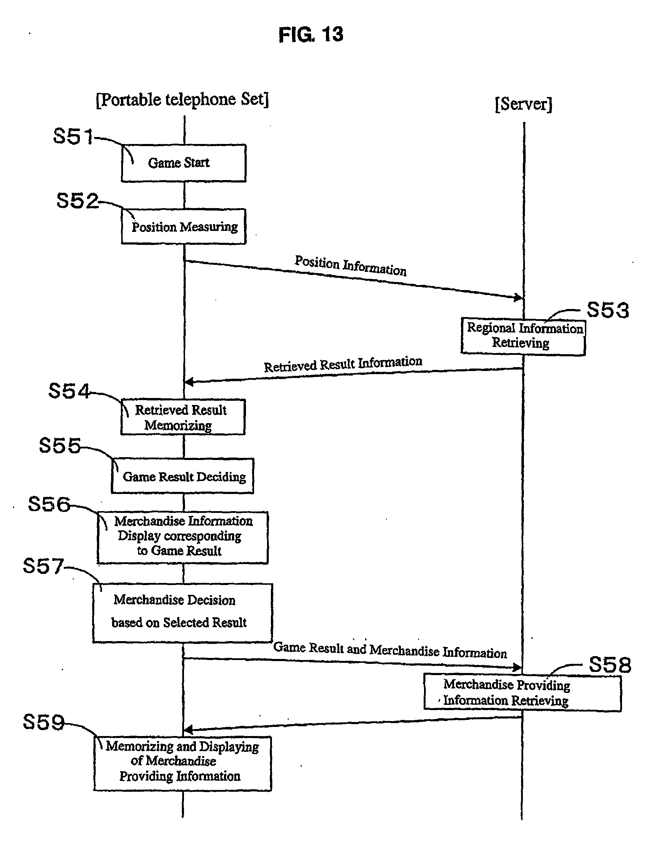

In Figure 13, a portable telephone set 60 has a GPS (Global Positioning System) antenna at the inside, and receives a reference frequency signal transmitted from plural satellites 50. The position in a receiving point of the telephone set 60 can be computed by integrating Doppler frequency for every predetermined time, where Doppler frequency is the difference between a reception frequency at the time of receiving the reference frequency signal and the reference frequency signal being memorized beforehand.

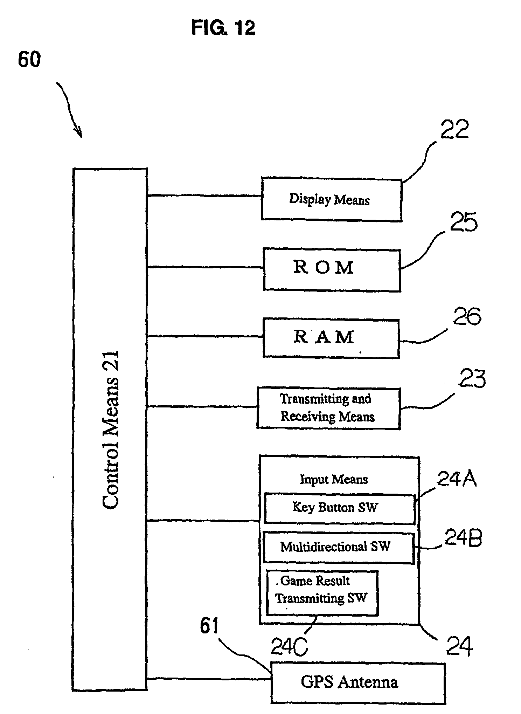

Figure 12 is the block diagram showing the constitution of the portable telephone set 60 according to another preferred embodiment of Figure 2. As for the parts comprising the same constitutions, since the parts are the same as these of Figure 2, the same codes are applied and the repeating explanation is omitted.

In figure 12, the portable telephone set 60 inputs the reference frequency signal received from the satellites 50 (Figure 11) to the control means 21 through the GPS antenna 61. The control means 21 measures the frequency of the received reference frequency signal (reception signal), and computes the receiving point based on the difference of the measured reception frequency and the reference frequency memorized in ROM 25.

The computed result is transmitted to the server according to the process procedure shown in Figure 13. That is, in Figure 13, when the game is started in the portable telephone set 60 like the above-mentioned case of Figure 4 (Step S51), the control means 21 of the portable telephone set 60 transitions to the n.ext step (Step S52) to compute the position of the portable telephone set 60 based on the reception signal received through the GPS antenna at this time.

The computed result is transmitted from the portable telephone set 60 to the server 1 through an Internet network 10. The server 1 receiving the position information of the portable telephone set 60 retrieves the store information and the prize information in the information stored in the sponsor database 6 beforehand, wherein the store information is about the store capable of providing the prize, various benefits or the like to the users, which is near the position of the portable telephone set 60, or the like (Step S53).

These retrieved results are immediately transmitted from the server 1 to the portable telephone set 60 to be stored in RAM 26 of the portable telephone set 60 (Step S54). After that, when the game result is decided (Step S55), the control means 21 of the portable telephone set 60 transitions to Step S56 to retrieve the prize information corresponding to the game result in the information downloaded from the server 1 to RAM 26 at this time, and displays the retrieved result on the display means 22.

When the users select the desired prize in the displayed prize information by operating the key button switch 24 A, the prize is decided (Step S57). The decided prize information is transmitted to the server 1, together with the information such as the telephone number or the like for specifying the game result and the portable telephone set 60.

The server 1 receiving the prize information retrieves the prize providing information corresponding to the prize information in the sponsor database 6 (Step S58). For example, if the prize information is a certain menu of a restaurant being near the position of the portable telephone set 60 at this time, the server 1 transmits the information for showing the meal ticket of the menu as the prize providing information to the portable telephone set 60.

The control means 21 receiving the prize providing information of the portable telephone set 60 displays the prize providing information on the display means 22. Thereby, the image showing, for example, the meal ticket is displayed on the display means 22, and the users can take the meal as the prize by showing the image displayed with the meal ticket of the portable telephone set 60 in the corresponding restaurant. The sponsor database 6 has not only the prize providing information but also advertising information, such as the name or merchandise of the store or the like, and this advertising information can be extracted suitably and displayed on the display means 22.

Since the benefit capable of using the store being near the position of the portable telephone set 60 can be obtained corresponding to the game result by using the GPS system in this way, the users become to be interested in the game result much more.

### [Game end]

The game in the portable telephone set 60 must be in an execution prohibiting state when the sponsor providing the game has no stock of the merchandise or the prize money. Therefore, in the portable telephone set 60, the timing to prohibit the execution of the game program is judged by confirming the sponsor database 6 of the server 1 with various timings to access to the server 1, for example, the timing for transmitting the game result to the server 1 or the like.

In the sponsor database 6 of the server 1, the information for showing the timing for ending the game providing are stored in addition to the prize stock information. This information can be stored by the sponsor freely in addition to being stored from the time of starting the game providing.

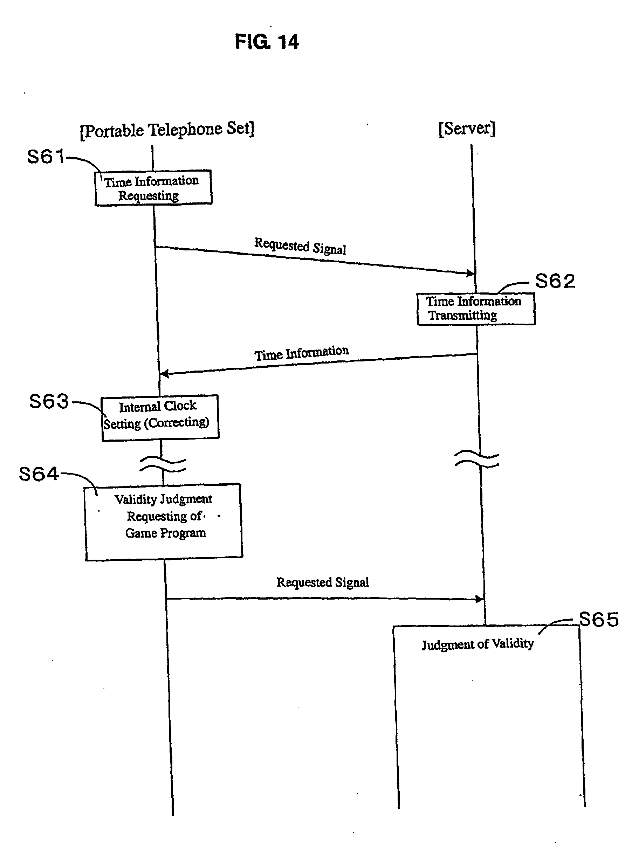

Therefore, the portable telephone set 60 can carry out the game end exactly by confirming the information for every timing predetermined. The processing procedure of the game end is shown in Figure 14. The control means 21 of the portable telephone set 60 requests a time information whenever accessing to the server 1 (Step S61).

The server 1 receiving a request signal of the time information transmits the time information indicated by an internal timer (not shown in Drawings) to the portable telephone set 60 (Step S62). The portable telephone set 60 receiving the time information prepares a clock function (not shown in Drawings) provided in the telephone set 60, based on the time information. Thereby, the portable telephone set 60 can always share the same time information with the server 1.

In this state, the portable telephone set 60 requests the judgment of the validity of the game program executed in the portable telephone set 60 to the server 1, with various timings for accessing to the server 1, for example, the timing for transmitting the game result to the server 1. In this case, the portable telephone set 60 transmits a judgment request signal to the server 1, together with the information to show the kind of the game program.

The server 1 receiving the judgment request signal retrieves the sponsor database 6 which stores the information of the sponsor providing the game program, based on the information to show the kind of the game program transmitted with the judgment request signal. The server 1 reads out whether the game program can be executed at that time or not and the timing information for ending the game program, and transmits these information to the portable telephone set 60 as a judgment result information of the validity.

The portable telephone set 60 receiving the judgment result information of the validity makes the execution of the game program into the prohibiting state with the predetermined timing, based on the judgment result (Step S66). For example, when the validity of the game is already lost, the control means 21 of the portable telephone set 60 immediately makes the execution of the game program into the prohibiting state. Further, when a later game end timing is designated as the judgment result, the execution of the game program is made into the prohibiting state at the time that the designated game end timing comes. In this case, since the internal clock function has the same time as the time clocked by the internal timer of the server 1 in the step S63, it can be prevented that the prize or the prize money is requested to the sponsor after ending of the game providing, i.e the prize or prize money providing. Thereby, it can be prevented that the prize or the prize money is requested after ending of the game providing by unjustly operating the clock function of the portable telephone set 60.

In addition, "Merchandise" in Figures 13 and 14 are used to have the same meaning as "Prize".

The present invention is not limited to the above-mentioned preferred embodiment.

For example, although use of the game program is stopped by setting the time limit with the timer of the portable telephone set in the above-mentioned preferred embodiment, there is a problem that the game result may be come out even after ending a campaign when the timer of the portable telephone set is out of order or made out of order by unjustly changing. In order to cope with this problem, it is preferable to take the constitution that the communication with the center is carried out through an Internet network to confirm a campaign stock before judging the game result at the server side, and to judge whether the campaign period of the game is ended or not corresponding to the stock confirmation result.

In addition to this, various design changes and corrections can be added in the claims of the present invention.

As mentioned above, according to the present invention, since the game is started by the incoming or the calling and the game result is displayed on the display means of the portable telephone set at the time of canceling the transitioned connection state on the opportunity of the incoming or the calling, or after passing of the predetermined time, the users of the portable telephone set can know in an instant whether the game result is advantageous or not from the display of the display means. Therefore, there is the effect that the users can obtain the result on real time without waiting the reception of the lottery result from the server as conventionally done. Further, since the start of the game is executed on the opportunity of the incoming or the calling, the users can look forward to the incoming to the portable telephone set, and also look forward to calling to the other telephone, thus it is possible to make the users use the portable telephone set more frequently.

## Claims

**1.** A portable telephone set having a game program capable of displaying a game result based on the game program on a display means comprising,
a control content, wherein the game based on the game program is started corresponding to an incoming to or calling from portable telephone set and the game result capable of providing a specified benefit to the users of the portable telephone set is displayed on the display means corresponding to a cancel of a connection of an incoming to or calling from the portable telephone set or after passing of a predetermined time from the incoming to or calling fr.om the portable telephone set.

**2.** The portable telephone set according to Claim 1, further comprising,
a control content, wherein when the portable telephone set gets the incoming during a presentation for displaying the game result on the display means, a priority is given to this incoming, and the presentation is suspended until canceling the connection with the incoming person.

**3.** The portable telephone set according to Claim 1 or Claim 2, further comprising,
a control content, wherein the execution of the game is canceled on condition of carrying out a first button operation being intended beforehand by the users of the portable telephone set.

**4.** The portable telephone set according to any one of from Claim 1 to Claim 3, further comprising,
a control content, in which a data relating to the game result is erased on condition of carrying out a second button operation being intended beforehand by the sponsor.

**5.** The portable telephone set according to any one of from Claim 1 to Claim 3, further comprising,
a control content, wherein when the game result is displayed on the display means, the game result can be read out by a reading device at a sponsor side, and an identification code for showing a validity time limit of the game result is displayed on the display means.

**6.** The portable telephone set according to any one of from Claim 1 to Claim 3, further comprising,
a control content, wherein a data relating to the game result is erased on condition of reaching the validity time limit of the game result.

**7.** The portable telephone set according to any one of from Claim 1 to Claim 6, further comprising,
a control content, in which a registered information is transmitted to the server on condition of registering the information being necessary for delivering the prize or the prize money corresponding to the game result by carrying out a third button operation being intended beforehand by the user.

**8.** The portable telephone set according to any one of from Claim 1 to Claim 7, further comprising,
a GPS function, and
a control content, wherein a regional game result is displayed on the display means by using said GPS function.

**9.** The portable telephone set according to any one of from Claim 1 to Claim 8, further comprising,
a stop program being stored for prohibiting the execution of the game program corresponding to the end of a campaign period of the game, and
a control content stopping the execution of the game program compulsorily by operating said stop program on condition of clocking the end of the campaign period by a clocking means of the portable telephone set.

**10.** A service providing server capable of receiving the game result from the portable telephone set through a communication line network and providing the service to the users of the portable telephone set corresponding to the received game result,
wherein the game is started corresponding to the incoming to or calling from the portable telephone set and the game result is decided corresponding to the cancel of the connection based on the incoming or calling or after passing of the predetermined time.

**11.** The service providing server according to Claim 10,
a registration information of a prize money or prize delivery destination corresponding to the game result is found out in a database on condition of receiving the game result from the portable telephone set, and an instruction for delivering the prize or the prize money to the delivery destination of the users of the portable telephone set is transmitted to a distributor terminal through the communication line network based on said found out registration information.

**12.** The service providing server according to Claim 10 or Claim 11,
wherein the regional game result is transmitted to the portable telephone set based on a GPS signal, on condition of receiving the GPS signal from the portable telephone set.

**13.** The service providing server according to Claim 9 or Claim 10,
wherein the regional game result is transmitted to the portable telephone set based on a GPS signal, on condition of receiving the GPS signal from the portable telephone set.

**13.** The service providing server according to any one of from Claim 10 to Claim 12,
wherein a clocked time of the portable telephone set is taken periodically, and the clocked time of the clocking means at the portable telephone side is synchronized with the clocked time of the clocking means at the server side.

**14.** The service providing server according to Claim 10 or Claim 13, comprising,
confirming a campaign stock by communicating with a center through the communication line network before judging the game result, and
judging whether the campaign period of the game is ended or not corresponding to the stock confirmation result.

**15.** A service providing method, comprising,
a stage for starting the game corresponding to the incoming to or calling from the portable telephone set,
a stage for transitioning to a connecting state by the incoming or calling, and receiving the decided game result from said portable telephone set corresponding to the cancel of the connecting state or after passing of the predetermined time, and
a stage for informing a winning of the prize or the prize money corresponding to the received game result.

**16.** The service providing method according to Claim 15, further comprising,
a stage for finding out a registration information of the prize money or prize delivery destination in the database corresponding to the game result on condition of receiving the game result from the portable telephone set, and transmitting the instruction for delivering the prize or the prize money to the delivery destination of the users of the portable telephone set to the distributor terminal through the communication line network based on said found out registration information.

**17.** The service providing method according to Claim 15 or Claim 16, further comprising,
a stage for transmitting the regional game result to the portable telephone set based on the GPS signal, on condition of receiving the GPS signal from the portable telephone set.

**18.** The service providing method according to Claim 15 or Claim 17, further comprising,
a stage for periodically taking the clocked time of the portable telephone set, and synchronizing the clocked time of the clocking means at the portable telephone side with the clocked time of the clocking means at the server side.

**19.** The service providing method according to Claim 15 or Claim 18, further comprising,
a stage for confirming the campaign stock by communicating with the center through the communication line network before judging the game result, and judging whether the campaign period of the game is ended or not corresponding to said stock confirmation result.

**20.** A portable telephone set, comprising,
a memory part for memorizing a display data for displaying a lottery result such as a hit or miss and an advertising information on the display means of the portable telephone set, and
a control means for extracting the lottery result carried out by a lottery process and the advertising information from said memory part, and displaying those data on the display means corresponding to the incoming to the terminal of the portable telephone set.
